# DEMANDE DE BREVET EUROPEEN

(11) **EP 0 556 095 A1**
(43) Date de publication de la demande: **18.08.1993**
(21) Numéro de dépôt: 93400278.3
(22) Date de dépôt: 04.02.1993
(51) Int. Cl.: F01P 11/16, G05D 23/02, G05D 23/12

(54) **Soupape thermostatique de sécurité pour circuit de refroidissement hydraulique**

(30) Priorité: 14.02.1992 FR 9201707
(71) Demandeur: Michel, Félix, F-75017 Paris (FR); Pinilla, Nicolas, Buenos Aires (AR)
(72) Inventeur: Michel, Félix, F-75017 Paris (FR); Pinilla, Nicolas, Buenos Aires (AR)
(74) Mandataire: Hasenrader, Hubert

(57) **Abrégé**

La soupape comprend une cage (2, 3) insérée dans le circuit et délimitant une chambre amont (16) et une chambre aval (17) dont la comunication est contrôlée par un clapet mobile susceptible de coopérer avec un siège fixe (23) et porté par une capsule thermostatique (9) soumise aux actions antagonistes d'une matière thermodilatable qu'elle contient et d'un ressort.

Suivant l'invention, le clapet est double et comporte, d'une part, un élément périphérique (21) situé dans la chambre amont (16) et repoussé par un premier ressort (22) contre le siège précité (23), d'autre part un élément central (15) faisant corps avec la capsule (9), susceptible de s'appuyer contre la face aval du clapet périphérique (21) sous l'action de la cire (dans 14) et de s'en écarter sous l'action d'un deuxième ressort (18).

## Description

La présente invention concerne une soupape thermostatique de sécurité pour circuit de refroidissement hydraulique, en particulier d'un moteur à combustion interne.

Une telle soupape est connue et permet d'interrompre la circulation du liquide de refroidissement vers le radiateur tant que la température du moteur n'a pas atteint une valeur déterminée. Elle comprend une cage insérée dans le circuit et délimitant une chambre amont et une chambre aval dont la communication est contrôlée par un clapet mobile susceptible de coopérer avec un siège fixe et porté par une capsule thermostatique soumise aux actions antagonistes d'une matière thermodilatable qu'elle contient et d'un ressort.

Dans une première forme de réalisation actuellement exploitée, la matière thermodilatable est de la cire dont la température de fusion correspond à la température d'intervention choisie pour la soupape. La capsule thermostatique maintient avec étanchéité l'une des extrémités d'une gaine déformable coiffant une tige fixée dans la capsule en aval du siège et la cire remplit une cavité de la capsule s'étendant autour de la gaine. Le clapet est porté par la capsule et la tige est en appui sur la cage.

Lorsque le clapet est appliqué contre le siège et interrompt toute communication entre l'amont et l'aval, la capsule plonge dans la chambre amont et s'échauffe au contact du liquide de refroidissement provenant du moteur. La cire change d'état et augmente de volume en passant de l'état solide à l'état liquide. Dans ces conditions, la capsule s'éloigne de la tige vers l'amont et accroît la capacité de la cavité contenant la cire ; il en résulte que le clapet se décolle du siège et s'en éloigne vers l'amont.

Si une fuite de cire ou une rupture de cage, se produit, le ressort maintient le clapet fermé et la température s'élève. Le refroidissement ne s'accomplissant plus, le moteur chauffe anormalement et il faut alors l'arrêter pour éviter le pire : rupture du joint de culasse, serrage et détérioration du moteur...

Dans une deuxième forme de réalisation antérieure, la capsule thermostatique est un soufflet tubulaire cannelé pour se déformer axialement et contenant un liquide tel que de l'alcool, de l'éther ou autre dont la tension de vapeur saturante correspond à la température d'intervention choisie pour la soupape. Lorsque, le clapet étant fermé, le liquide de refroidissement provenant du moteur atteint cette température, la capsule soumise à la tension de vapeur saturante s'allonge et ouvre le clapet vers l'aval. Si une fuite de matière ou une rupture de cage se produit, le clapet reste collé au siège et les mêmes inconvénients que précédemment apparaissent.

Dans une troisième forme de réalisation, la capsule thermostatique, semblable à la capsule de la première forme de réalisation, est en appui en amont sur la cage et la tige porte le clapet. En cas de fuite de matière ou de rupture de cage, le clapet reste également collé au siège.

La présente invention a pour but de rétablir la circulation du liquide de refroidissement lorsque le clapet tend à rester collé au siège à la suite d'une perte de matière thermodilatable ou d'une rupture de cage.

Dans ce but et conformément à l'invention, le clapet est à double action pour se décoller du siège dans un sens lorsque la température du liquide de refroidissement atteint et dépasse la température dite de tarage et dans le sens opposé lorsqu'une fuite de cette matière ou une rupture d'un élément d'appui de la capsule se produit.

Selon une caractéristique particulière, avantageusement applicable à une soupape thermostatique à cire, la tige portant la capsule contenant la cire prend appui dans la chambre aval et le clapet est disposé, en état de bon fonctionnement, dans la chambre amont, le clapet se décollant du siège et se déplaçant vers l'amont sous l'effet d'une élévation de température et vers l'aval sous l'effet d'une fuite de la cire ou d'une rupture de la cage en partie aval.

Suivant une première forme de réalisation, le clapet est double et comporte d'une part, un élément périphérique situé dans la chambre amont et repoussé par un premier ressort contre le siège précité, d'autre part un élément central faisant corps avec la capsule, susceptible de s'appuyer contre la face aval du clapet périphérique sous l'action de la cire et de s'en écarter sous l'action d'un deuxième ressort.

Suivant une deuxième forme de réalisation, le clapet fait corps avec la capsule, est assujetti au ressort, est susceptible de pénétrer dans la chambre aval et porte un joint à lèvre susceptible de s'appliquer contre le siège précité, de s'en écarter sans déformation vers l'amont et de s'en écarter en se déformant contre la paroi de la chambre aval.

Divers autres caractéristiques et avantages de l'invention ressortent d'ailleurs de la description détaillée qui suit.

Des formes de réalisation de l'objet de l'invention sont représentées, à titre d'exemples non limitatifs, sur le dessin annexé.

Sur ce dessin :
- les figures 1 à 3 et 3a sont des élévations-coupes montrant une première forme de réalisation d'une soupape thermostatique à cire conforme à l'invention, respectivement en position de fermeture, en position d'ouverture par élévation de température et en position d'ouverture par fuite de cire ou de rupture de la cage en partie aval, positions qui définissent trois états de fonctionnement,
- les figures 4 à 6 et 6a sont des vues analogues aux figures 1 à 3 et 3a respectivement, illustrant une deuxième forme de réalisation d'une soupape thermostatique à cire conforme à l'invention.
- les figures 7 à 9 sont des vues schématisant, pour une soupape thermostatique à tension de vapeur saturante, les trois états de fonctionnement précités lorsque le clapet est double comme sur les figures 1 à 3 et 3a.
- la figure 10 est une vue analogue aux figures 7 à 9 lorsque le clapet porte un joint à lèvre comme sur les figures 4 à 6 et 6a.

La figure 11 est une élévation-coupe montrant une variante d'une soupape thermostatique à cire conforme à l'invention en position de fermeture.

La figure 12 montre en détail la liaison entre la tige d'une capsule thermostatique à cire et le logement de cette tige.

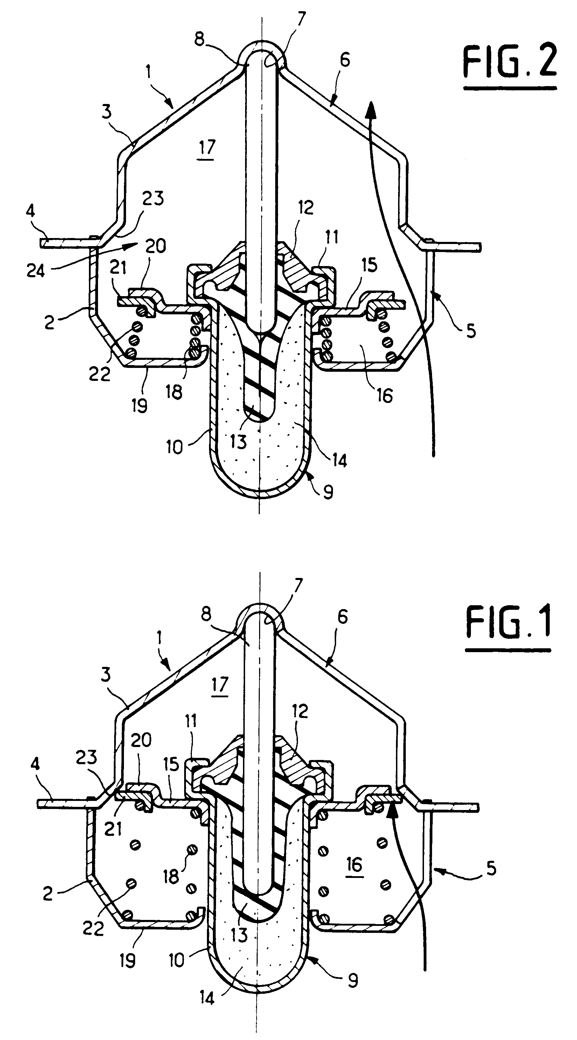

Ainsi que cela est bien connu, la soupape thermostatique représentée sur les figures 1 à 6 comporte une cage 1 constituée par deux coquilles métalliques 2 et 3 fixées l'une sur l'autre. Cette cage 1 est destinée à être insérée dans le circuit de refroidissement d'un moteur à combustion interne, par exemple en interposant une collerette 4 entre des brides de serrage du circuit ; les coquilles 2 et 3 présentent des passages 5 et 6 qui communiquent avec les parties amont et aval respectivement du circuit.

La coquille aval 3 comporte un logement 7 dans lequel est centrée, pour y prendre appui, une tige 8 sur l'extrémité libre de laquelle est montée une capsule thermostatique 9. Cette capsule comporte une douille métallique 10 prolongée par une collerette épaulée 11 sertie sur un manchon 12. Ce manchon qui est enfilé sur la tige 8 maintient contre ladite tige et dans ladite collerette 11, l'extrémité ouverte d'une gaine déformable 13 coiffant cette tige 8. Une cavité 14 se trouve alors délimitée par la capsule 9 autour de la gaine 13 et cette cavité est remplie par de la cire.

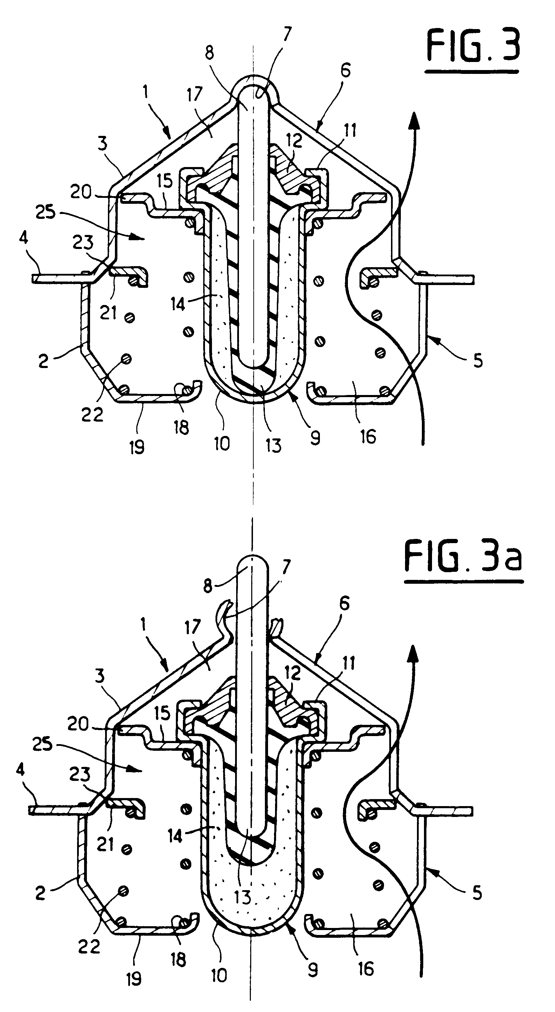

Suivant la première forme de réalisation illustrée par les figures 1 à 3 et 3a, un clapet central 15 fait corps avec la douille 10 de la capsule thermostatique 9 et peut se déplacer aussi bien dans la chambre aval 17 délimitée par la coquille 3 que dans la chambre amont 16 délimitée par la coquille 2. Un ressort hélicoïdal 18 est enfilé sur la douille 10 et interposé entre le clapet 15 et le fond 19 de la coquille 2. Ce ressort et la cire ont sur la douille 10 des actions antagonistes.

Le clapet 15 comporte une jupe épaulée 20 dans laquelle peut se centrer un clapet annulaire périphérique 21 soumis à l'action d'un ressort 22 prenant appui sur le fond 19 de la coquille 2. Le clapet 21 est susceptible de coopérer avec un siège fixe tronconique 23 de la coquille 3.

Dans la position de fermeture illustrée par la figure 1, la cire est à l'état solide et contracté et la douille 10 de la capsule occupe une position de repos. Dans cette position, le clapet 15 repose par sa jupe 20 sur le clapet 21 qui est lui-même appliqué par le ressort 22, contre le siège fixe 23. Les clapets 15 et 21, séparent donc la chambre amont 16 de la chambre aval 17 en interrompant ainsi la circulation du liquide de refroidissement.

Lorsque la température de ce liquide atteint et dépasse la température de tarage de la soupape thermostatique, c'est-à-dire la température à partir de laquelle la circulation du liquide de refroidissement doit se rétablir, la cire se trouvant dans la cavité 14 fond et augmente brusquement de volume. En effet, la cire est sélectionnée pour fondre à cette température. Cet accroissement de volume a pour effet, ainsi que cela ressort de la figure 2, d'éloigner la douille 10 de l'extrémité libre de la tige 8 et donc de la faire coulisser le long de celle-ci. Dans ces conditions, les deux clapets 15 et 21 appliqués l'un contre l'autre s'éloignent du siège 23 et libèrent un passage 24.

Dès lors, une communication s'établit entre les chambres amont 16 et aval 17 de sorte que le liquide de refroidissement en provenance de l'amont du circuit traverse les ajourages 5 de la coquille 2, la chambre 16, le passage 24, la chambre 17 et les ajourages 6 de la coquille 3 et s'écoule vers le radiateur.

Lorsque la température du liquide de refroidissement baisse, la cire diminue de volume en se solidifiant et les clapets 15, 21 repoussés par les ressorts 18 et 22 se ferment sur le siège 23.

La figure 3 illustre la position d'ouverture en cas de fuite de la cire et la figure 3a la même position en cas de rupture de la cage en partie aval. Dans ces deux cas, le ressort 18 provoque le coulissement vers l'aval de la douille 10 jusqu'à ce que le fond de celle-ci bute, à travers la gaine 13 contre le bout de la tige 8. Le clapet 21 reste appliqué par son ressort 22 contre le siège 23, tandis que le clapet 15 s'en éloigne dans la chambre aval 17, son diamètre étant plus petit, en libérant un passage 25.

Dès lors, une communication s'établit par le passage 25 entre la chambre amont 16 et la chambre aval 17. Par suite, la soupape ne reste pas fermée et la température du liquide de refroidissement ne s'élève pas anormalement. Cela revient au même que de supprimer la soupape thermostatique, suppression dont l'inconvénient est un accroissement du temps nécessaire à la mise en température du moteur, ainsi qu'au chauffage de l'habitacle et l'avantage est d'éviter la panne et/ou la détérioration du moteur.

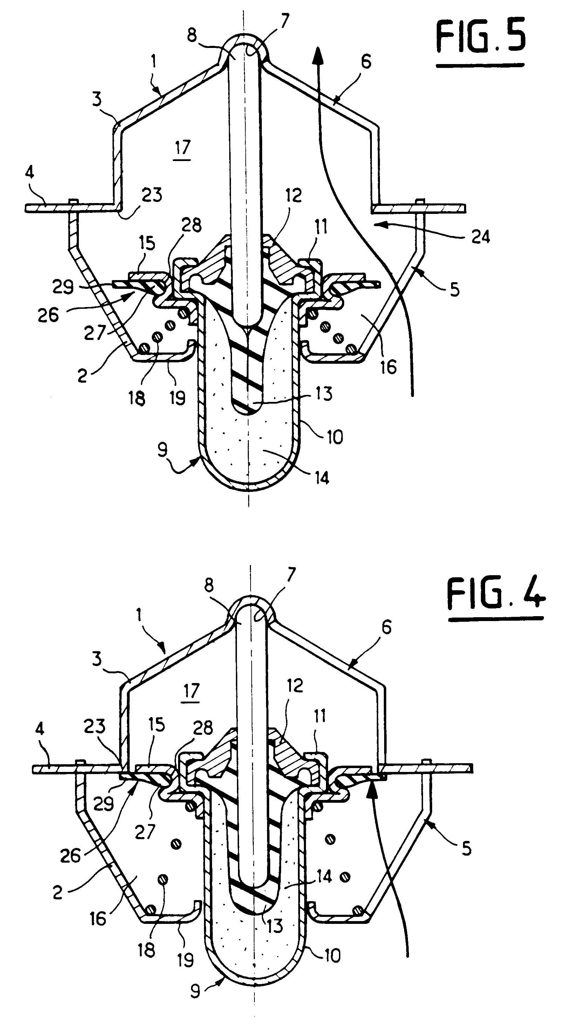

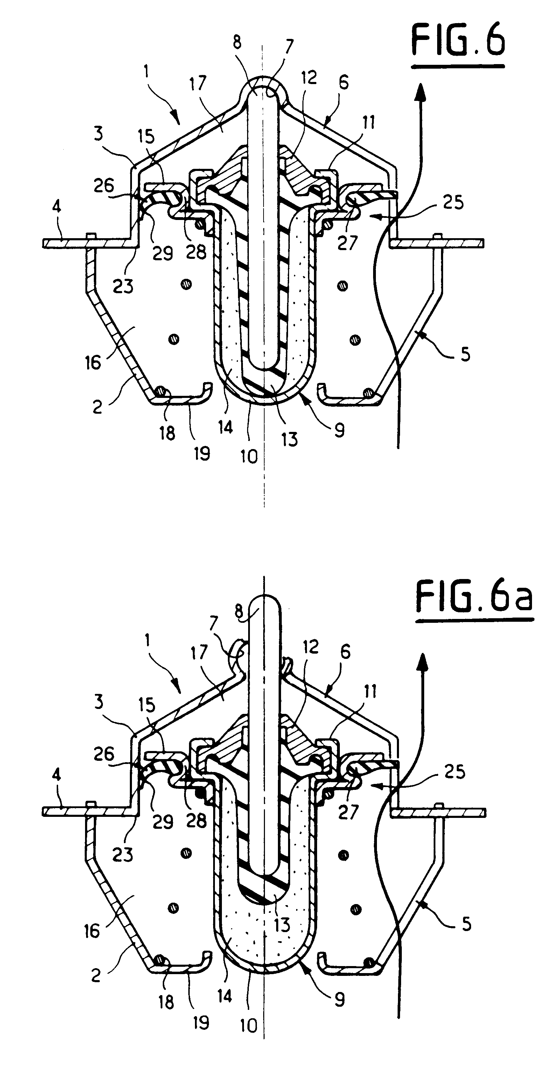

La deuxième forme de réalisation illustrée par les figures 4 à 6 et 6a diffère de la première par le fait que le clapet 21 est supprimé et remplacé par un joint à lèvre 26 monté sur le clapet 15 fixé à la douille 10 de la capsule et soumis à l'action du ressort 18. A cet effet, le joint comporte un bourrelet annulaire central 27 encastré dans une gorge 28 du clapet 15 et entouré par une lèvre coronale flexible 29 qui, dans la position de repos illustrée par la figure 4, est appliquée contre le siège 23 pour isoler les deux chambres 16 et 17 l'une de l'autre. Avantageusement, le siège 23 est plat et le ressort 18 est hélicoïdal conique.

Dans la position d'ouverture par élévation de température illustrée par la figure 5, la lèvre 29 reste plane et s'étend dans la chambre amont 16. Par contre, dans la position d'ouverture par fuite de cire illustrée par la figure 6 ou par rupture de la cage en partie aval illustrée par la figure 6a, la lèvre 29 se déforme en cloche contre la paroi de la coquille 3 et découvre le passage 25 d'accès à la chambre aval 17.

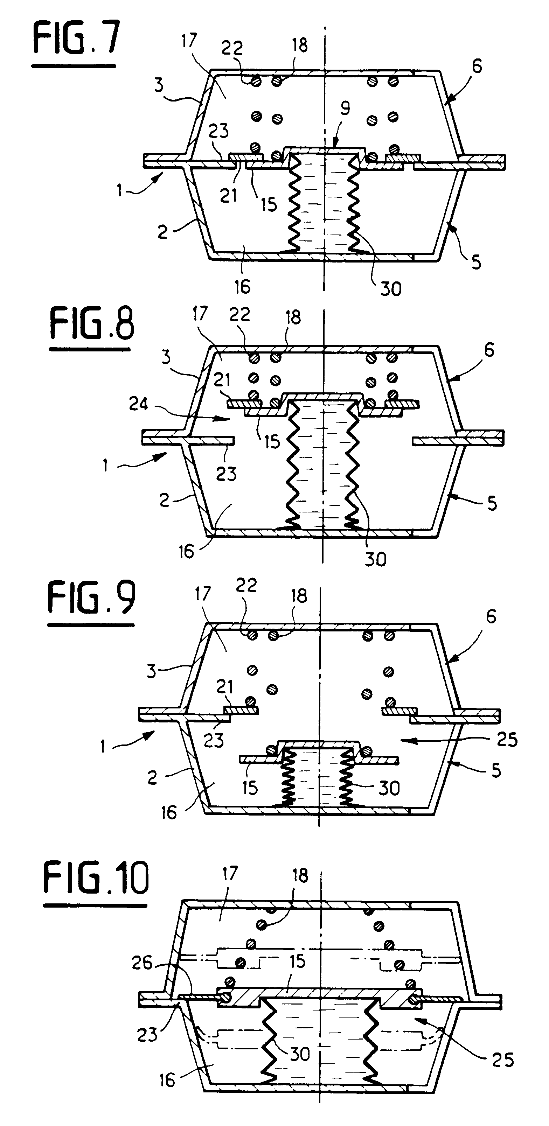

Le clapet à double action 15, 21 (figures 1 à 3 et 3a) ou 15, 29 (figures 4 à 6 et 6a) est appliqué dans ce qui précède à une soupape thermostatique à cire. Il peut également l'être à une soupape à tension de vapeur saturante telle qu'elle est schématisée sur les figures 7 à 9.

Une telle soupape comporte un soufflet tubulaire camelé 30 en métal qui est déformable axialement. Il est scellé de façon étanche et contient un liquide volatil. Le soufflet 30 est logé dans la chambre amont 16 d'une cage. Il porte un premier clapet 15 repoussé à l'encontre d'un ressort 18 vers un deuxième clapet 21 lui-même repoussé par un ressort 22 contre un siège 23. Les ressorts sont logés dans la chambre aval 17 de la cage 1 et les clapets s'étendent dans celle-ci lorsque la soupape est en position de repos (figure 7).

Suivant une autre réalisation semblable à celle des figures 4 à 6 et 6a, le clapet 15 faisant corps avec la capsule 9 porte un joint à lèvre 26 et est repoussé par un ressort 18 pour que, dans la position de repos précitée (figure 7), la lèvre du joint 26 soit appuyée sur le siège 23. Le ressort est également logé dans la chambre aval 17 de la cage et le clapet avec joint s'étend normalement dans celle-ci.

Ces clapets à double action 15, 21 et 15, 26 fonctionnent de la même façon que précédemment mais à l'inverse. En effet, en position d'ouverture par élévation de température (figures 8 et 10), le clapet pénètre dans la chambre aval 17 pour libérer le passage 24 et en position d'ouverture par fuite du liquide volatil (figures 9 et 10) ou de rupture de la cage en partie amont, ledit clapet pénètre dans la chambre amont 16 pour libérer le passage 25.

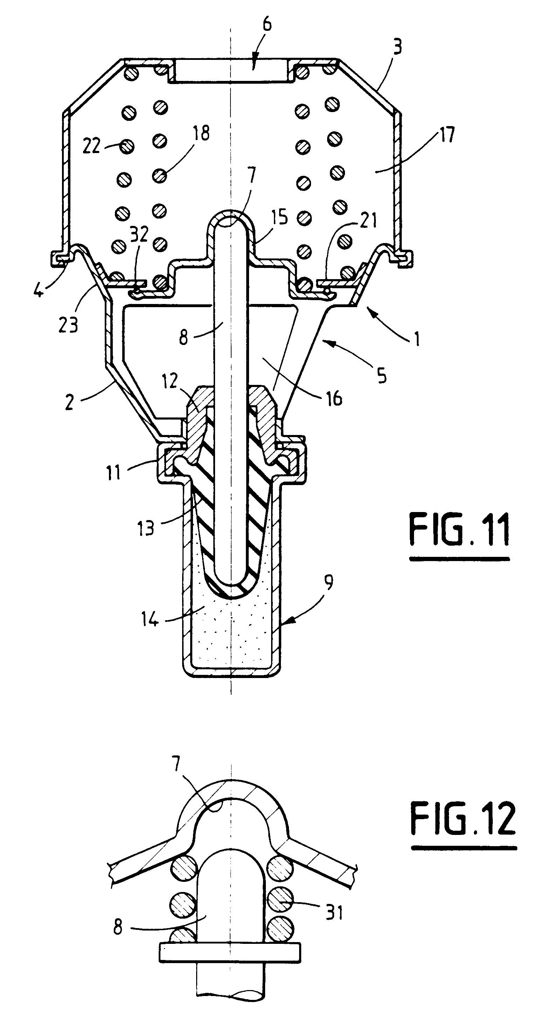

La figure 11 montre une variante de réalisation de la soupape thermostatique des figures 7 à 9, dans laquelle le soufflet 30 est remplacé par une capsule thermostatique à cire 9, située en amont du siège 23, dont la douille 10 est solidaire de la coquille amont 2 et dont la tige 8 est en appui dans un logement 7 prévu dans le premier clapet 15.

Lorsque la température du liquide de refroidissement atteint et dépasse la température de tarage de la soupape thermostatique 9, la tige 8 repousse le premier clapet 15 et le deuxième clapet 21 à l'encontre du ressort 18 et du ressort 22, dans la chambre aval 17. En cas de fuite de cire ou de rupture de la coquille amont 2, le ressort 18 repousse le premier clapet 15 dans la chambre amont 16. Les deux clapets 15 et 21 peuvent également être remplacés par un clapet unique 15 présentant un joint 26 à lèvre 29 susceptible de s'appliquer sur le siège 23.

Afin d'assurer l'étanchéité de la soupape thermostatique à cire dans la position de fermeture représentée sur les figures 1 et 11, il est avantageux d'interposer un troisième ressort 31 (voir figure 12) entre l'extrémité de la tige 8 et le logement 7 prévu dans la coquille aval 3 (figure 1) ou dans le premier clapet 15 (figure 11). Dans ce cas, en position de fermeture, la tige 8 ne porte pas directement sur le logement 7. La force de ce troisième ressort 31 est calculée de manière qu'en tenant compte de la différence de pression de liquide entre la chambre amont 16 et la chambre aval 17, elle puisse compenser la force du deuxième ressort 18, tout en étant inférieure à la somme des forces exercées par les ressorts 18 et 22.

Comme on le voit sur la figure 11, un joint d'étanchéité 32 peut être disposé entre les parois en vis-à-vis du premier clapet 15 et du deuxième clapet 21. Le faible écrasement de ce joint 32, en position de fermeture de la soupape thermostatique 9, permet de compenser les défauts de cosntruction des clapets 15 et 21. Le réglage de la force de compression qui s'exerce sur le joint 32 peut être assuré par déformation de la paroi du logement 7 ou par des moyens de réglage de la position de l'extrémité libre de la tige 8 dans le logement 7.

## Revendications

**1.-** Soupape thermostatique pour circuit de refroidissement d'un moteur à combustion interne, comprenant une cage (1) insérée dans le circuit et délimitant une chambre amont (16) et une chambre aval (17) dont la communication est contrôlée par un clapet mobile susceptible de coopérer avec un siège fixe (23) et porté par une capsule thermostatique (9) soumise aux actions antagonistes d'une matière thermodilatable qu'elle contient et d'un ressort,
caractérisée en ce que le clapet (15, 21 ; 15, 26) est à double action pour se décoller du siège (23) dans un sens lorsque la température du liquide de refroidissement atteint et dépasse la température dite de tarage et dans le sens opposé lorsqu'une fuite de cette matière ou une rupture d'un élément d'appui de la capsule se produit.

**2.-** Soupape thermostatique selon la revendication 1, dans laquelle la capsule thermostatique (9) maintient avec étanchéité l'une des extrémités d'une gaine déformable (13) coiffant une tige fixe (8) et délimite autour de la gaine une cavité (14) contenant de la cire,
caractérisée en ce que la tige (8) prend appui dans la chambre aval (17) et le clapet (15) est disposé, en état de bon fonctionnement, dans la chambre amont (16), le clapet (15) se décollant du siège (23) et se déplaçant vers l'amont sous l'effet d'une élévation de température et vers l'aval sous l'effet d'une fuite de la cire ou d'une rupture de la cage en partie aval.

**3.-** Soupape thermostatique selon la revendication 2, caractérisée en ce que le clapet est double et comporte, d'une part, un élément périphérique (21) situé dans la chambre amont (16) et repoussé par un premier ressort (22) contre le siège précité (23), d'autre part un élément central (15) faisant corps avec la capsule (9), susceptible de s'appuyer contre la face aval du clapet périphérique (21) sous l'action de la cire (dans 14) et de s'en écarter sous l'action d'un deuxième ressort (18).

**4.-** Soupape thermostatique selon la revendication 2, caractérisée en ce que le clapet (15) fait corps avec la capsule (9), est assujetti à un ressort (18), est susceptible de pénétrer dans la chambre aval (17) et porte un joint (26) à lèvre (29) susceptible de s'appliquer contre le siège précité (23), de s'en écarter sans déformation vers l'amont et de s'en écarter vers l'aval en se déformant contre la paroi de la chambre aval (17).

**5.-** Soupape thermostatique selon la revendication 1, dans laquelle la capsule thermostatique (9) est un soufflet tubulaire cannelé (30) contenant un liquide volatil,
caractérisée en ce que le soufflet (30) est logé dans la chambre amont (16) et le clapet (15) est disposé, en état de bon fonctionnement, dans la chambre aval (17), le clapet (15) se décollant du siège (23) et se déplaçant vers l'aval sous l'effet d'une élévation de température et vers l'amont sous l'effet d'une fuite de liquide ou d'une rupture de la cage en partie amont.

**6.-** Soupape thermostatique selon la revendication 5, caractérisée en ce que le clapet est double et comporte, d'une part, un élément périphérique (21) situé dans la chambre aval (17) et repoussé par un premier ressort (22) contre le siège précité (23), d'autre part un élément central (15) faisant corps avec la capsule (9), susceptible de s'appuyer contre la face amont du clapet périphérique (21) sous l'action de la tension de vapeur saturante dans le soufflet (30) et de s'en écarter sous l'action d'un deuxième ressort (18).

**7.-** Soupape thermostatique selon la revendication 5, caractérisée en ce que le clapet (15) fait corps avec la capsule (9), est assujetti à un ressort (18), est susceptible de pénétrer dans la chambre amont (16) et porte un joint (26) à lèvre (29) susceptible de s'appliquer contre le siège précité (23), de s'en écarter sans déformation vers l'aval et de s'en écarter vers l'amont en se déformant contre la paroi de la chambre amont (16).

**8.-** Soupape thermostatique selon la revendication 1, dans laquelle la capsule thermostatique (9) maintient avec étanchéité l'une des extrémités d'une gaine déformable (13) coiffant une tige (8) délimite autour de la gaine une cavité (14) contenant de la cire et prend appui dans la chambre amont (16),
caractérisée en ce que la tige (8) prend appui sur le clapet (15) et le clapet (15) est disposé, en état de bon fonctionnement, dans la chambre aval (17), le clapet (15) se décollant du siège (23) et se déplaçant vers l'aval sous l'effet d'une élévation de température et vers l'amont sous l'effet d'une fuite de la cire ou d'une rupture de la cage en partie amont.

**9.-** Soupape thermostatique selon la revendication 8, caractérisée en ce que le clapet est double et comporte, d'une part, un élément périphérique (21) situé dans la chambre aval (17) et repoussé par un premier ressort (22) contre le siège précité (23), d'autre part un élément central (15) faisant corps avec la tige (8), susceptible de s'appuyer contre la face amont du clapet périphérique (21) sous l'action de la cire (dans 14) et de s'en écarter sous l'action d'un deuxième ressort (18).

**10.-** Soupape thermostatique selon la revendication 8 caractérisée en ce que le clapet (15) fait corps avec la tige (8), est assujetti à un ressort (18), est susceptible de pénétrer dans la chambre amont (16) et porte un joint (26) à lèvre (29) susceptible de s'appliquer contre le siège précité (23), de s'en écarter sans déformation vers l'aval et de s'en écarter vers l'amont en se déformant contre la paroi de la chambre amont (16).

**11.-** Soupape thermostatique selon l'une quelconque des revendications 3 ou 9 dans laquelle la tige (8) prend appui dans un logement (7), caractérisée en ce qu'un troisième ressort (31) est interposé entre la tige (8) et le logement (7) afin d'assurer l'étanchéité de ladite soupape dans la position de fermeture.
